# EUROPÄISCHE PATENTSCHRIFT

(11) **EP 0 953 466 B1**
(45) Veröffentlichungstag und Bekanntmachung des Hinweises auf die Patenterteilung: **09.04.2003**
(21) Anmeldenummer: 98117798.3
(22) Anmeldetag: 18.09.1998
(51) Int. Cl.: B60J 7/10

(54) **Mechanische Vorrichtung zum Heben eines auf Eckrungen ruhenden Dachs eines Nutzfahrzeugaufbaus**
Mechanical device for lifting the roof of a lorry superstructure supported by stanchions
Système de levage mécanique pour un toit de structure de camion supporté pour montants

(30) Priorität: 29.04.1998 DE 29807741 U
(43) Veröffentlichungstag der Anmeldung: 03.11.1999
(73) Patentinhaber: F. HESTERBERG & SÖHNE GmbH & Co. KG, D-58256 Ennepetal (DE)
(72) Erfinder: Nieland, Friedhelm, 58339 Breckerfeld (DE); Feinbier, Joachim, 58256 Ennepetal (DE); Bosch, Heiko, 58339 Breckerfeld (DE); Klein, Claus-Jürgen, 58332 Schwelm (DE)
(74) Vertreter: Kneissl, Richard, Dr.

(56) Entgegenhaltungen:
- FR-A- 2 702 712
- US-A- 3 694 024
- US-A- 4 505 512

## Beschreibung

Die Erfindung betrifft eine mechanische Vorrichtung zum Heben eines auf Eckrungen ruhenden Dachs eines Nutzfahrzeugaufbaus, gemäß dem in FR 2 702 712 A offenbarten Oberbegriff des Anspruches 1.

Die Dächer von Nutzfahrzeugaufbauten besitzen üblicherweise einen die Ladefläche des Fahrzeugs in Dachhohe umlaufenden Rahmen, der auf Eckrungen des Fahrzeugaufbaus ruht. Er kann ein festes Dach oder ein Dach aus Planen tragen. Um den Laderaum in voller Höhe, beispielsweise mit einem Gabelstapler, beladen zu können, sind die Eckrungen häufig teleskopartige verlängerbar, wobei das Ausfahren in den meisten Fällen Ober einen hydraulischen Antrieb erfolgt. Es gibt jedoch für diesen Zweck bereits auch mechanische Antriebe, die verhältnismäßig kompliziert sind, da sie gleichzeitig auf die vier Eckrungen wirken, um das gesamte Dach zu heben. Häufig würde es jedoch ausreichen, nur eine Eckrunge auszufahren, um eine bestimmten Stelle der Ladefläche des Fahrzeugs in voller Höhe beladen zu können.

Aufgabe der Erfindung istes, eine einfache mechanische Vorrichtung zum Heben eines auf Eckrungen ruhenden Dachs eines Nutzfahrzeugaufbaus zur Verfügung zu stellen, die als Einzelantrieb ausgebildet ist und die eine in sich geschlossene Einheit darstellt, welche der Fahrzeughersteller direkt und in einfacher Weise an einer Eckrunge anbringen kann, und zwar sowohl bei der Fertigung des Fahrzeugaufbaus als auch zur Nachrüstung desselben.

Die Lösung dieser Aufgabe ist gemäß der Erfindung gekennzeichnet durch eine am oberen Ende der Eckrunge zu befestigende senkrechte Führung, in der ein Hubglied mit Dachanbindung auf- und abbeweglich geführt ist, und durch einen zwischen dem Hubglied und einer Abstützung im unteren Bereich der Runge wirkenden mechanischen Antrieb zum Auf- und Abbewegen des Hubglieds.

Die erfindungsgemäße Vorrichtung laßt sich als Einheit produzieren und an jeder Eckrunge anbringen. Sie eignet sich jedoch besonders dann, wenn die Eckrunge aus einem U-Profil besteht, in welchem der Antrieb befestigt werden kann. Sie ist einfach aufgebaut und daher nicht nur preiswert herstellbar, sondern auch zuverlässig. Sie gestattet es das Dach nur dort anzuheben, wo dies beim Be- und Entladen gerade nötig ist So kann es beispielsweise ausreichen, nur die beiden Rungen auf einer Fahrzeugseite mit je einer erfindungsgemäßen Vorrichtung zu versehen.

Die bevorzugten Weiterbildungen der Unteransprüche sind alle in den beiden Ausführungsformen verkörpert, die nachstehend anhand der beigefügten Zeichnungen beispielhaft erläutert werden. In diesen Zeichnungen sind die erfindungsgemaßen Vorrichtungen wegen der Länge derselben mit mehreren Schnitten dargestellt. Es zeigen:
Fig. 1 eine Ansicht der ersten Ausführungsform;
Fig. 2 einen Schnitt durch die Mitte von Fig. 1;
Fig. 3 eine Ansicht der zweiten Ausführungsform; und
Fig. 4 einen Schnitt durch die Mitte von Fig. 3.

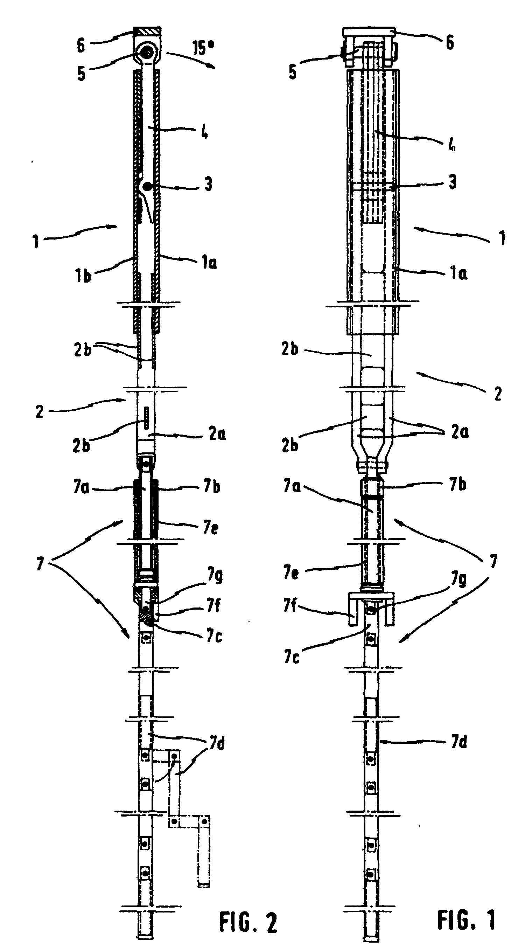

Die Ausführungsform gemäß den Fig. 1 und 2 besitzt eine an der Runge anzuschweißende Führung 1, die als Führungskanal ausgebildet ist (Anspruch 2) und aus einem U-Profil 1a und einer aufgeschweißten Abdeckplatte 1 b besteht. In diesem Führungskanal 1 ist ein Hubglied 2 geführt, das seinerseits aus zwei Stangen 2a und eingeschweißten Brücken 2b besteht. Am Hubglied 2 ist mittels einer Achse 3 eine Schwenklasche 4 angelenkt, die an ihrer Oberseite über eine Achse 5 an einer üblichen Dachanbindung 6 angelenkt ist (Anspruch 3). Die Schwenklasche 4 kann bezüglich des Hubglieds um 15° ausschwenken, um eine Schrägstellung des Dachs zu berücksichtigen.

Der mechanische Antrieb 7 besteht aus einer Gewindestange 7a und einer darauf sitzenden Mutter 7b, die durch eine über ein Kardangelenk 7c angelenkte Kurbel 7d gegeneinander verdrehbar sind (Anspruch 5). Die Kurbel 7d hat in bekannter Weise mehrere Gelenke, so daß sie nach Bedarf in eine gestreckte Stellung gebracht und bei Nichtgebrauch beispielsweise in einer U-förmigen Runge festgelegt werden kann. Die Gewindestange 7a ist drehfest am Hubglied 2 angelenkt. Die Mutter 7b ist am oberen Ende eines Rohrs 7e befestigt, das die Gewindestange 7a umgibt. Das untere Ende des Rohrs 7e stützt sich drehbar auf einer Abstützung 7f ab, die an der Runge anzuschweißen ist Durch diese Abstützung 7f ragt eine Lasche 7g hindurch, an der die Kurbel 7d über das Kardangelenk 7c angelenkt ist (Anspruch 6).

Es ist ersichtlich daß durch Drehen der Kurbel 7d das Hubglied 2 mit der Dachanbindung 6 bezüglich der Abstützung 7f und damit der Runge auf- und abbewegt werden kann.

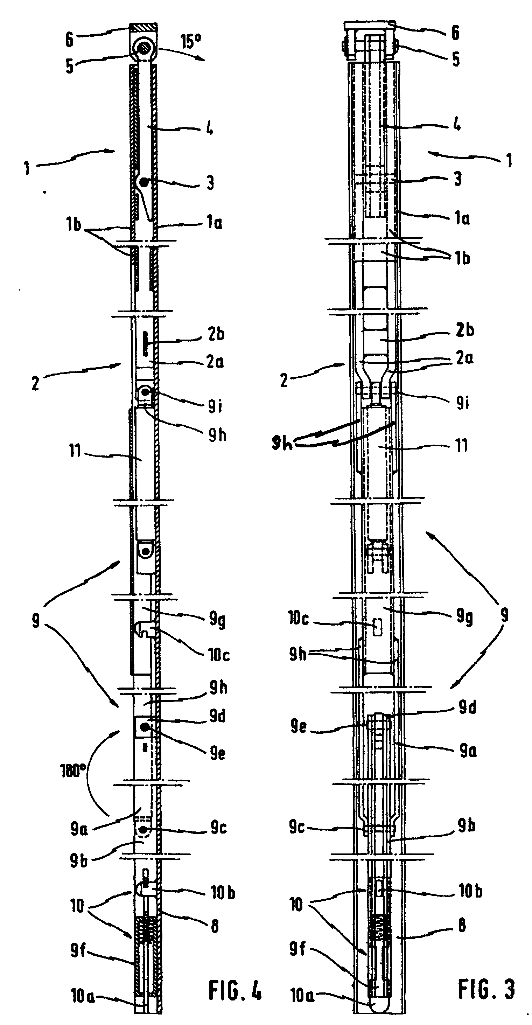

Bei der in den in den Fig. 3 und 4 gezeigten Ausführungsform sind die Teile 1 bis 6 identisch mit denjenigen der Ausführungsform der Fig. 1 und 2. Die Unterschiede bestehen darin, daß erstens an die Führung 1 eine untere Verlängerung 8 angebracht ist (Anspruch 4) und daß zweitens der mechanische Antrieb 9 als Kniehebelantrieb ausgebildet ist.

Der Kniehebelantrieb 9 besitzt Kniehebelglieder 9a,9b, die über eine Kniegelenkachse 9c miteinander verbunden sind. Das Kniehebelglied 9b ist mittels einer Lasche 9d und einer Achse 9e an der als U-Profil ausgebildeten Verlängerung 8 angelenkt. Es erstreckt sich Ober die Kniegelenkachse 9c hinaus und ist dort als Handhabe 9f ausgebildet (Anspruch 7). Das Kniehebelglied 9a besteht in seinem mittleren Bereich aus einem U-Profil 9g und aus oben und unten daran angeschweißten Stangen 9h. Über eine Achse 9i ist das Kniehebelglied 9a am Hubglied 2 angelenkt.

Das Kniehebelglied 9b ist mit seiner Handhabe 9f um 180° nach oben klappbar. In dieser Stellung befindet sich die Kniegelenkachse 9c bezüglich der anderen Anlenkachsen 9e, 9i der Kniehebelglieder 9a,9b in einer Übertotpunklage (Anspruch 8), was zur Folge hat, daß durch die Belastung auf dem Hubglied 2 der Kniehebel mit seinen Kniehebelgliedern 9a,9b in dieser Lage fixiert wird.

Zur weiteren Sicherung der Handhabe 9f in der Offen- bzw. der Geschlossenstellung ist an dieser ein üblicher Einrastmechanismus 10 vorgesehen, der einen federbelasteten Schieber 10a aufweist, welcher in der Geschlossenstellung der Handhabe 9f in einen Gegenhalter 10b und in der Offenstellung desselben in einen Gegenhalter 10c einrastbar ist (Anspruch 9).

Zur Erleichterung der Betätigung des Antriebs 9 erstreckt sich zwischen dem Hubglied 2 und der Verlängerung 8 eine Gasfeder 11 (Anspruch 10), die bezüglich ihres Druckvermögens so bemessen ist, daß sie den Druck des Dachs auf den Antrieb 9 möglichst weitgehend verringert.

Bei beiden Ausführungsformen sind die Abmessungen der Führung 1, des Hubglieds 2 und des mechanischen Antriebs 7,9 so bemessen, daß ein Anheben des Dachs um etwa 40 cm möglich ist. Dies reicht aus, um den Nutzraum des Fahrzeugs in der vollen Höhe mit einem Gabelstapler beladen zu können.

## Patentansprüche

1. Mechanische Vorrichtung zum Heben eines auf Eckrungen ruhenden Dachs eines Nutzfahrzeugaufbaus, mit einem Hubglied (2) mit Dachanbindung (6), und mit einem zwischen dem Hubglied (2) und einer Abstützung (7f,9d) im unteren Bereich der Runge wirkenden mechanischen Antrieb (7,9) zum Auf- und Abbewegen des Hubglieds (2) **gekennzeichnet durch** eine am oberen Ende der Eckrunge zu befestigende senkrechte Führung (1), in der das Hubglied (2) mit Dachanbindung (6) aufund abbeweglich geführt ist.

2. Vorrichtung nach Anspruch 1, **dadurch gekennzeichnet, daß** die Führung (1) als Führungskanal (1a,1b) ausgebildet ist.

3. Vorrichtung nach Anspruch 1 oder 2, **dadurch gekennzeichnet, daß** die Dachanbindung (6) auf einer Schwenklasche (4) angelenkt ist, die ihrerseits am Hubglied (2) angelenkt ist

4. Vorrichtung nach einem der Ansprüche 1 bis 3, **dadurch gekennzeichnet, daß** die Abstützung (7f,9d) auf einer vorzugsweise als U-Profil ausgebildeten Verlängerung (8) der Führung (1) angebracht ist

5. Vorrichtung nach einem der Ansprüche 1 bis 4, **dadurch gekennzeichnet, daß** der mechanische Antrieb aus einer Gewindestange (7a) und einer darauf sitzenden Mutter (7b) besteht, die mittels einer ein Kardangelenk (7c) aufweisenden Kurbel (7d) gegeneinander verdrehbar sind.

6. Vorrichtung nach Anspruch 5, **dadurch gekennzeichnet, daß** die Gewindestange (7a) drehfest unten am Hubglied (2) angelenkt ist und die Mutter (7b) am oberen Ende eines die Gewindestange (7a) umgebenden Rohrs (7e) befestigt ist, das mit seinem unteren Ende drehbar an der Abstützung (7f) gelagert ist, wobei die Abstützung (7f) ein Loch aufweist, durch das ein Ansatz (7g) am Rohr (7e) hindurchreicht, an dem die Kurbel (7d) angelenkt ist.

7. Vorrichtung nach einem der Ansprüche 1 bis 4, **dadurch gekennzeichnet, daß** der mechanische Antrieb aus einem Kniehebel (9a,9b) besteht, von dem ein Kniehebelglied (9b) über das Kniegelenk (9c) hinaus verlängert und dort als Handhabe (9f) ausgebildet ist.

8. Vorrichtung nach Anspruch 7, **dadurch gekennzeichnet, daß** in der ausgefahrenen Stellung des Hubglieds (2) das Kniehebelgelenk (9c) sich bezüglich der beiden anderen Anlenkpunkte (9e,9i) der Kniehebelglieder (9a,9b) in einer Übertotpunktlage befindet.

9. Vorrichtung nach Anspruch 7 oder 8, **dadurch gekennzeichnet, daß** die Handhabe (9f) einen gegen Federdruck ausrückbaren Einrastmechanismus (10) aufweist, der in den beiden Extremlagen der Handhabe (9f) in je einen Gegenhalter (10b,10c) einrastbar ist.

10. Vorrichtung nach Anspruch 4 und einem der Ansprüche 7 bis 9, **dadurch gekennzeichnet, daß** sich zwischen dem Hubglied (2) und der Verlängerung (8) der Führung (1) eine Gasfeder (11) erstreckt,

## Claims

1. A mechanical device for lifting a roof of a commercial vehicle superstructure, said roof resting on corner stations, with a lifting member (2) with a roof attachment (6) and with a mechanical drive (7, 9) acting between the lifting member (2) and a support (7f, 9d) in the bottom region of the stanchion for raising and lowering the lifting member (2), **characterised by** a perpendicular guide (1) for fixing at the top end of the corner stanchion, the lifting member (2) with the roof attachment (6) being guided for upward and downward movement in said guide (1).

2. A device according to claim 1, **characterised in that** the guide (1) is constructed as a guide channel (1a, 1b).

3. A device according to claim 1 or 2, **characterised in that** the roof attachment (6) is articulated on a pivoting lug (4) which is in turn articulated on the lifting member (2).

4. A device according to any one of claims 1 to 3, **characterised in that** the support (7f, 9d) is mounted on an extension (8) of the guide (1), said extension preferably being in the form of a U-profile.

5. A device according to any one of claims 1 to 4, **characterised in that** the mechanical drive consists of a screwthreaded rod (7a) and a nut (7b) mounted thereon, said rod and said nut being rotatable relatively to one another by means of a crank (7d) having a cardan joint (7c).

6. A device according to claim 5, **characterised in that** the screwthreaded rod (7a) is articulated at the bottom on the lifting member (2) so as to be non-rotatable and the nut (7b) is fixed at the top end of a tube (7e) surrounding the screwthreaded rod (7a), said tube being mounted rotatably by its bottom end on the support (7f), the latter having a hole through which a projection (7g) on the tube (7e) extends, the crank (7b) being articulated on said projection.

7. A device according to any one of claims 1 to 4, **characterised in that** the mechanical drive consists of a toggle lever (9a, 9b), from which a toggle lever member (8b) extends beyond the toggle joint (9c) where it is constructed as a handle (9f).

8. A device according to claim 7, **characterised in that** in the extended position of the lifting member (2) the toggle lever joint (9c) is situated in a top dead centre position with respect to the other two points of articulation (9e, 9i) of the toggle lever members (9a, 9b).

9. A device according to claims 7 or 8, **characterised in that** the handle (9f) comprises a catch mechanism (10) which is disengageable against spring pressure and which in the two extreme positions of the handle (9f) is adapted to catch in a companion holder (10b, 10c) in each case.

10. A device according to claim 4 and any one of claims 7 to 9, **characterised in that** a gas spring (11) extends between the lifting member (2) and the extension (8) of the guide (1).

## Revendications

1. Dispositif mécanique pour lever un toit d'une carrosserie de véhicule utilitaire reposant sur des ranches d'angle, avec un organe de levage (2) avec une fixation de toit (6), et avec une commande mécanique (7, 9) agissant entre l'organe de levage (2) et un appui (7f, 9d) dans la zone inférieure de la ranche pour le déplacement de haut en bas de l'organe de levage (2), **caractérisé par** un guidage (1) vertical à fixer à la partie supérieure de la ranche d'angle, dans lequel l'organe de levage (2) est guidé dans un mouvement de haut en bas avec la fixation de toit (6).

2. Dispositif selon la revendication 1, **caractérisé en ce que** le guidage (1) est conçu sous forme de canal de guidage (1a, 1b).

3. Dispositif selon la revendication 1 ou 2, **caractérisé en ce que** la fixation de toit (6) est articulée à un collier de rotation (4), qui de son côté est articulé à l'organe de levage (2).

4. Dispositif selon l'une des revendications 1 à 3, **caractérisé en ce que** l'appui (7f, 9d) est mis en place sur un prolongement (8) du guidage (1) conçu de préférence sous forme de profil en U.

5. Dispositif selon l'une des revendications 1 à 4, **caractérisé en ce que** la commande mécanique se compose d'une tige filetée (7a) et d'un écrou (7b) reposant dessus, qui peuvent être tordus l'un contre l'autre au moyen d'une manivelle (7d) présentant un joint de cardan (7c).

6. Dispositif selon la revendication 5, **caractérisé en ce que** la tige filetée (7a) est articulée à l'organe de levage (2) en bas en le tournant de manière solidaire et l'écrou (7b) est fixé à l'extrémité supérieure d'un tube (7e) entourant la tige filetée (7a), tube qui :repose de manière rotative sur l'appui (7f) avec son extrémité inférieure, moyennant quoi l'appui (7f) présente un trou, à travers lequel passe une pièce ajoutée (7g) sur le tuyau (7e), auquel est articulée la manivelle (7d).

7. Dispositif selon l'une des revendications 1 à 4, **caractérisé en ce que** la commande mécanique se compose d'un levier coudé (9a, 9b), à partir duquel se prolonge vers l'extérieur un organe formant levier coudé (9b) au-dessus de l'articulation coudée (9c) et qui est conçu à cet endroit sous forme de prise (9f).

8. Dispositif selon la revendication 7, **caractérisé en ce qu'**en position descendante de l'organe de levage (2), l'articulation du levier coudé (9c) se trouve par rapport aux deux autres points d'articulation (9e, 91) des organes formant leviers coudés (9a, 9b) dans une position de point mort supérieure.

9. Dispositif selon la revendication 7 ou 8, **caractérisé en ce que** la prise (9f) présente un mécanisme d'enclenchement (10) pouvant être désembrayé à l'encontre une pression de ressort, qui peut être enclenché dans les deux situations extrêmes de la prise (9f) dans chaque point d'appui (10b, 10c).

10. Dispositif selon la revendication 4 et l'une des revendications 7 à 9, **caractérisé en ce qu'**un ressort à gaz (11) s'étend entre l'organe de levage (2) et le prolongement (8) du guidage (1).
